# EUROPEAN PATENT APPLICATION

(11) **EP 4 745 412 A1**
(43) Date of publication of application: **20.05.2026**
(21) Application number: 24218262.4
(22) Date of filing: 09.12.2024
(51) Int. Cl.: F04D 29/42, F04D 29/44, G06F 1/20, H05K 7/20, F04D 29/52, F04D 29/54

(54) **FAN CARD AND ELECTRONIC DEVICE**

(30) Priority: 14.11.2024 TW 113143740
(71) Applicant: Moxa Inc., 242032 New Taipei City (TW)
(72) Inventor: Liu, Yu-Yu, 242032 New Taipei City (TW); Su, Yu-Chiao, 242032 New Taipei City (TW); Yen, Chang-Hsu, 242032 New Taipei City (TW)
(74) Representative: Kurig, Thomas

(57) **Abstract**

A fan card (100) includes a fan unit (110) and a flow guide assembly (120). The fan unit (110) includes a rotating shaft (112) and multiple fan blades (114) extending outward from the rotating shaft (112). The flow guide assembly (120) is disposed next to the fan unit (110) and includes a first air outlet (121) and a second air outlet (122). The fan unit (110) faces the first air outlet (121). An area of the first air outlet (121) is smaller than an area surrounded by the fan blades (114). The second air outlet (122) and the first air outlet (121) face different directions. An airflow entering the fan unit (110) passes through the flow guide assembly (120) and is discharged from the first air outlet (121) and the second air outlet (122).

## Description

### BACKGROUND

### Technical Field

The disclosure relates to a fan card and an electronic device, and in particular to a fan card and an electronic device with improved heat dissipation performance.

### Description of Related Art

With the advancement of technology, heat generated by electronic devices during operation has gradually increased. How to effectively improve heat dissipation performance is a research goal in the art.

### SUMMARY

The disclosure provides a fan card, which may use a single fan unit to achieve air discharge in two directions to improve overall heat dissipation.

The disclosure provides an electronic device, which includes the fan card.

A fan card of the disclosure includes a fan unit and a flow guide assembly. The fan unit includes a rotating shaft and multiple fan blades extending outward from the rotating shaft. The flow guide assembly is disposed next to the fan unit and includes a first air outlet and a second air outlet. The fan unit faces the first air outlet, an area of the first air outlet is smaller than an area surrounded by the fan blades, and the second air outlet and the first air outlet face different directions. An airflow entering the fan unit passes through the flow guide assembly and is discharged from the first air outlet and the second air outlet.

In an embodiment of the disclosure, the flow guide assembly includes a first flow guide portion, a second flow guide portion, and a third flow guide portion that are sequentially connected along a direction, an aperture of the first flow guide portion along the direction is smaller than an aperture of the third flow guide portion along the direction, an aperture of the second flow guide portion along the direction gradually expands, the first air outlet is located on the first flow guide portion, and the second air outlet is located on the third flow guide portion.

In an embodiment of the disclosure, the first flow guide portion has a surface lower than the third flow guide portion, and the fan unit is disposed on the surface.

In an embodiment of the disclosure, the second flow guide portion includes an inclined surface, and the inclined surface faces a side wall of the fan unit.

In an embodiment of the disclosure, the flow guide assembly includes a bottom casing and an inner rectifying structure, the first air outlet is located on the bottom casing, the inner rectifying structure is disposed on the bottom casing, the inner rectifying structure includes a C-shaped opening, the first air outlet is located within a projection range of the C-shaped opening on the bottom casing, and the C-shaped opening faces the second air outlet.

In an embodiment of the disclosure, the bottom casing includes a bottom plate and two elevating members protruding from the bottom plate, each of the two elevating members includes an increasing height portion and a constant height portion that are connected, the bottom plate includes a first area, a second area, and a third area that are sequentially connected along a direction, the first air outlet is located in the first area, the increasing height portion is located in the second area, the constant height portion is located in the third area, the flow guide assembly further includes a lid, the lid covers the two elevating members, the second area, and the third area, and the bottom plate, the two elevating members, and the lid surround to form the second air outlet.

In an embodiment of the disclosure, the flow guide assembly further includes two covers and two fixing portions, the two covers are connected to the inner rectifying structure and cover the two elevating members, the two fixing portions are connected to the two covers and are away from the inner rectifying structure, and the lid covers the two covers.

In an embodiment of the disclosure, multiple positioning pillars protrude from the inner rectifying structure, the positioning pillars are located around the C-shaped opening, extend along a shaft line of the rotating shaft, and penetrate multiple positioning holes of the fan unit.

In an embodiment of the disclosure, the inner rectifying structure is a flexible material, and a hardness of the inner rectifying structure is less than or equal to a hardness of the bottom casing.

In an embodiment of the disclosure, the inner rectifying structure and the bottom casing are integrated.

In an embodiment of the disclosure, the fan unit is an axial flow fan, and air enters and is discharged along a shaft line of the rotating shaft.

An electronic device of the disclosure includes a housing, a motherboard, an expansion card, and the fan card. The housing includes an opening. The motherboard is disposed in the housing and includes a slot. The expansion card is inserted into the slot. The fan card is disposed next to the expansion card and fixed onto the housing. The first air outlet faces the expansion card, the second air outlet faces the opening, and the airflow entering the fan unit passes through the flow guide assembly, flows from the first air outlet toward the expansion card, and leaves the housing from the second air outlet and the opening.

Based on the above, the flow guide assembly of the fan card of the disclosure is disposed next to the fan unit and includes the first air outlet and the second air outlet facing different directions. The fan unit faces the first air outlet of the flow guide assembly, so that a part of the wind blown out by the fan unit is discharged from the first air outlet. In addition, since the area of the first air outlet of the flow guide assembly is smaller than the area surrounded by the fan blades of the fan unit, and the other part of the wind blown out by the fan unit is blocked or/and guided by the part of the flow guide assembly next to the first air outlet, the probability of air discharge from the second air outlet may be increased. Therefore, through the above design, the fan card of the disclosure may achieve air discharge in two directions through the single fan unit, thereby improving overall heat dissipation. In the electronic device adopting the fan card, the airflow entering the fan unit passes through the flow guide assembly, a part of the airflow flows from the first air outlet toward the expansion card to provide heat dissipation for the expansion card, and the other part of the airflow leaves the housing from the second air outlet, so that heat in the housing may be guided out.

### BRIEF DESCRIPTION OF THE DRAWINGS

FIG. 1 is a partial three-dimensional schematic view of an electronic device according to an embodiment of the disclosure.
FIG. 2 is a schematic view of a fan card moved upward and a hidden expansion card of FIG. 1.
FIG. 3 is a top schematic view of FIG. 1.
FIG. 4 is a schematic view of the fan card of FIG. 1.
FIG. 5 is a cross-sectional schematic view of FIG. 4.
FIG. 6 is a schematic view of a fan unit and a flow guide assembly of FIG. 4.
FIG. 7 is an exploded schematic view of FIG. 4.

### DESCRIPTION OF THE EMBODIMENTS

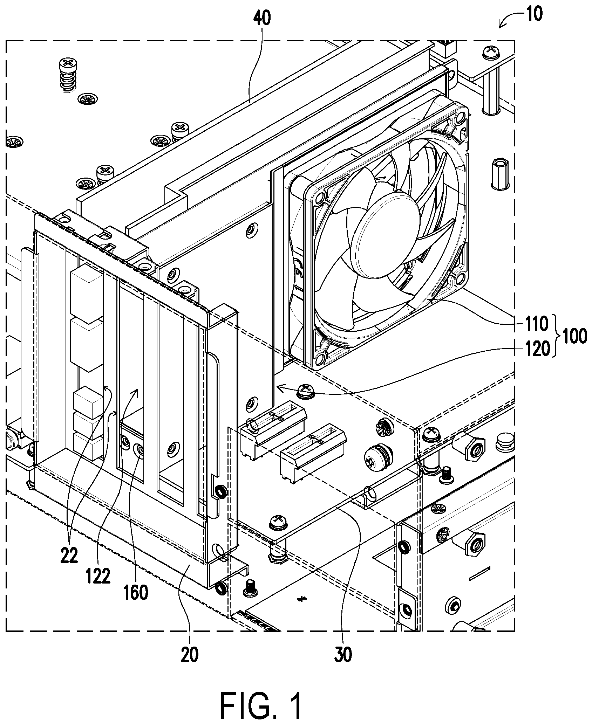

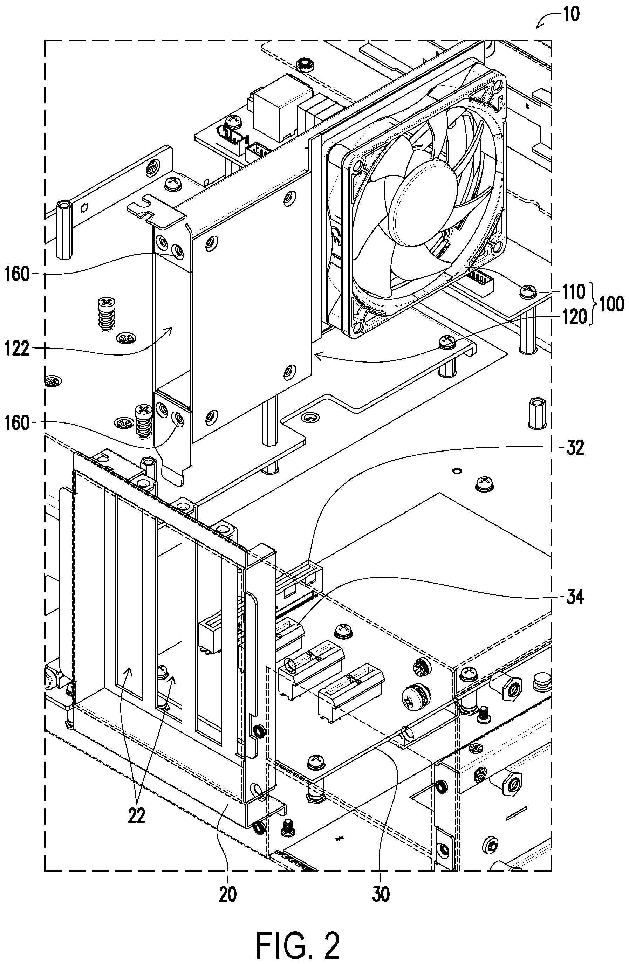

FIG. 1 is a partial three-dimensional schematic view of an electronic device according to an embodiment of the disclosure. FIG. 2 is a schematic view of a fan card moved upward and a hidden expansion card of FIG. 1. It should be noted that an expansion card 40 of FIG. 1 is schematically represented by simple lines. In fact, the expansion card 40 has multiple electronic parts and may be optionally combined with a structure such as a heat sink.

Please refer to FIG. 1 and FIG. 2. An electronic device 10 of the embodiment is, for example, a server or a computer, but the type of the electronic device 10 is not limited thereto. The electronic device 10 includes a housing 20, a motherboard 30, the expansion card 40, and a fan card 100.

The housing 20 includes multiple openings 22. The motherboard 30 is disposed in the housing 20 and includes a slot 32 (FIG. 2). The expansion card 40 is inserted into the slot 32. The expansion card 40 may be a RAID card, and the slot 32 may be, for example, a PCI-E slot, but the types of the expansion card 40 and the slot 32 are not limited thereto. The fan card 100 is disposed next to the expansion card 40 and is fixed onto the housing 20. The fan card 100 may be electrically connected to the motherboard 30 through a wire (not shown), so that the motherboard 30 supplies power to the fan card 100.

The expansion card 40 and the fan card 100 are fixed onto the housing 20 and are exposed from two of the openings 22. In an embodiment, the fan card 100 may also be optionally inserted into or leaned against a slot 34 (FIG. 2) to improve the stability of the fan card 100 on the motherboard 30.

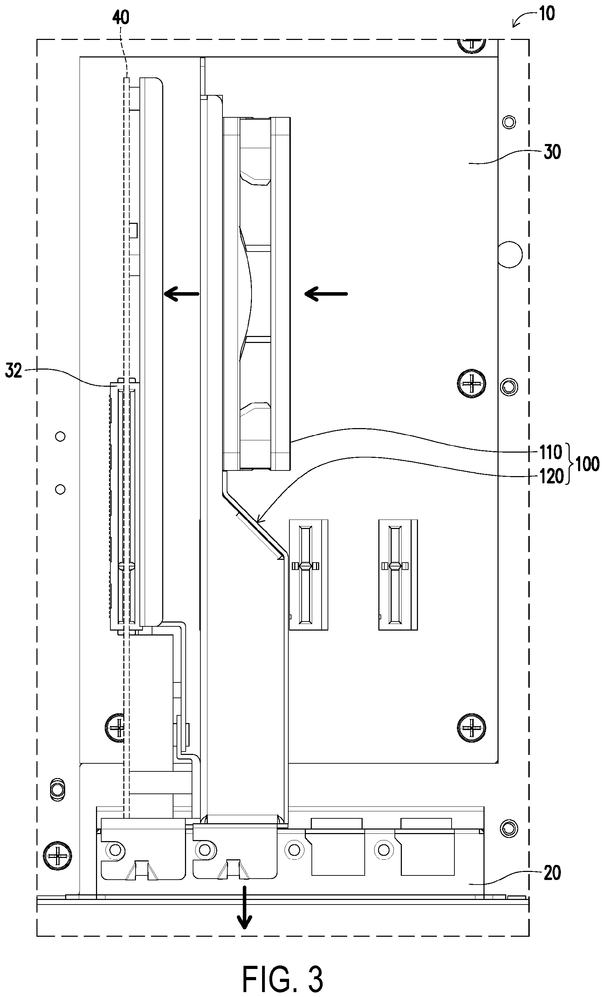

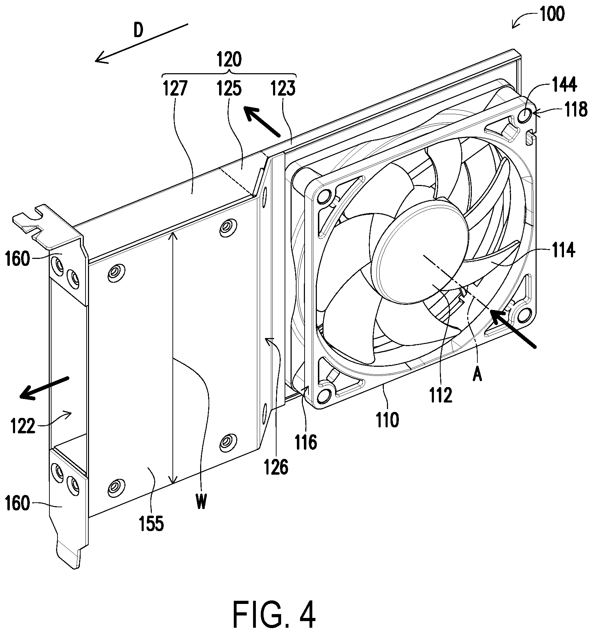

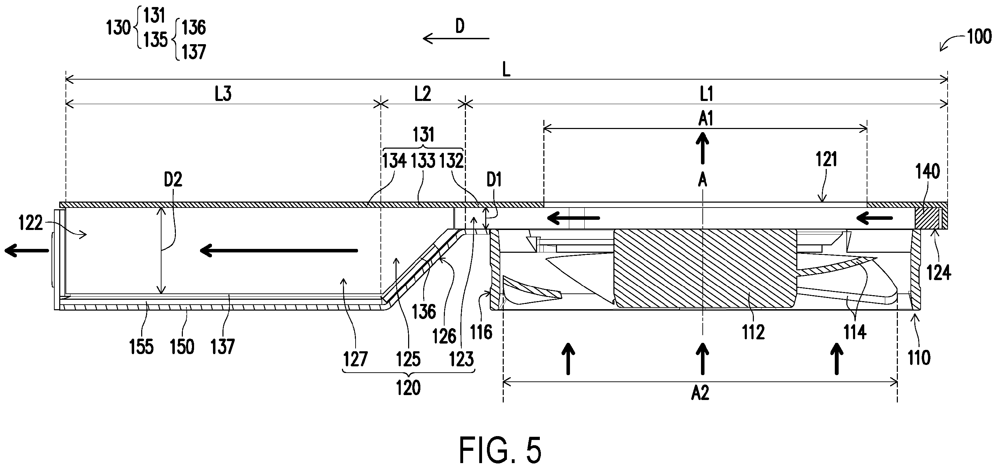

FIG. 3 is a top schematic view of FIG. 1. FIG. 4 is a schematic view of the fan card of FIG. 1. FIG. 5 is a cross-sectional schematic view of FIG. 4. It should be noted that the expansion card 40 of FIG. 3 is schematically represented by dotted lines to expose the slot 32.

Please refer to FIG. 3 to FIG. 5. The fan card 100 of the embodiment includes a fan unit 110 and a flow guide assembly 120. As shown in FIG. 3, the flow guide assembly 120 is located between the fan unit 110 and the expansion card 40. The flow guide assembly 120 is configured to guide an airflow to the outside of the expansion card 40 and the housing 20 to improve heat dissipation performance in the electronic device 10.

As can be seen from FIG. 4, the fan unit 110 includes a rotating shaft 112 and multiple fan blades 114 extending outward from the rotating shaft 112. In the embodiment, the fan unit 110 is an axial flow fan, and air inflow and air discharge are generally along a shaft line A of the rotating shaft 112. Of course, in other embodiments, the fan unit 110 may also be a centrifugal fan, and the flow guide assembly 120 may also be correspondingly adjusted to provide optimal heat dissipation. The type of the fan unit 110 is not limited thereto.

As shown in FIG. 5, the flow guide assembly 120 is disposed next to the fan unit 110 and includes a first air outlet 121 and a second air outlet 122. The fan unit 110 faces the first air outlet 121 of the flow guide assembly 120, so that a part of the airflow blown out by the fan unit 110 is discharged from the first air outlet 121. In the embodiment, the first air outlet 121 is located on the shaft line A of the rotating shaft 112 of the fan unit 110, but in other embodiments, the first air outlet 121 may also be slightly offset from the shaft line A. The second air outlet 122 and the first air outlet 121 face different directions. Specifically, as shown in FIG. 3, the first air outlet 121 faces the expansion card 40, and the second air outlet 122 faces the opening 22 of the housing 20.

In addition, since an area (an area surrounded by a diameter A1) of the first air outlet 121 of the flow guide assembly 120 is smaller than an area (an area surrounded by a diameter A2) surrounded by the fan blades 114 of the fan unit 110, a part of the rotating and expanding airflow blown out by the fan unit 110 is blocked or/and guided by a part of the flow guide assembly 120 next to the first air outlet 121, and the airflow does not completely leave from the first air outlet 121. Such a design may increase the probability of air discharge from the second air outlet 122.

Therefore, the fan card 100 may achieve air discharge in two directions through the single fan unit 110, thereby improving overall heat dissipation. In the electronic device 10 adopting the fan card 100, the airflow entering the fan unit 110 passes through the flow guide assembly 120, and a part of the airflows from the first air outlet 121 toward the expansion card 40 to provide heat dissipation for the expansion card 40, and the other part of the airflow leaves the housing 20 from the second air outlet 122, so that heat in the housing 20 may be guided out.

As shown in FIG. 5, in the embodiment, the flow guide assembly 120 includes a first flow guide portion 123, a second flow guide portion 125, and a third flow guide portion 127 that are sequentially connected along a direction D. The first air outlet 121 is located on the first flow guide portion 123, and the second air outlet 122 is located on the third flow guide portion 127.

In the embodiment, an aperture D1 of the first flow guide portion 123 along the direction D is smaller than an aperture D2 of the third flow guide portion 127 along the direction D, and an aperture of the second flow guide portion 127 along the direction D gradually expands from the aperture D1 to the aperture D2. Such a design may enable airflow pressure of the third flow guide portion 127 to be smaller, so that the airflow may flow toward the third flow guide portion 127 more smoothly and leave from the second air outlet 122.

As can be seen from FIG. 5, in the embodiment, in the direction D, a length L1 of the first flow guide portion 123 approximately accounts for half of a length L of the flow guide assembly 120, and the sum of a length L2 of the second flow guide portion 125 and a length L3 of the third flow guide portion 127 approximately accounts for the other half of the length L of the flow guide assembly 120. In addition, in the direction D, the length L2 of the second flow guide portion 125 is smaller than the length L3 of the third flow guide portion 127. Of course, the sizes of the first flow guide portion 123, the second flow guide portion 125, and the third flow guide portion 127 are not limited thereto.

In addition, in the embodiment, as can be seen from FIG. 4, widths W of the first flow guide portion 123, the second flow guide portion 125, and the third flow guide portion 127 are the same, and as can be seen from FIG. 5, the first flow guide portion 123, the second flow guide portion 125, and the third flow guide portion 127 have thickness changes. The first flow guide portion 123 has a surface 124 lower than the third flow guide portion 127, and the fan unit 110 is disposed on the surface 124. The second flow guide portion 125 includes an inclined surface 126, and the inclined surface 126 faces a side wall 116 of the fan unit 110. Since the fan unit 110 is disposed on the first flow guide portion 123 with the smallest thickness, the overall thickness of the fan card 100 may be reduced.

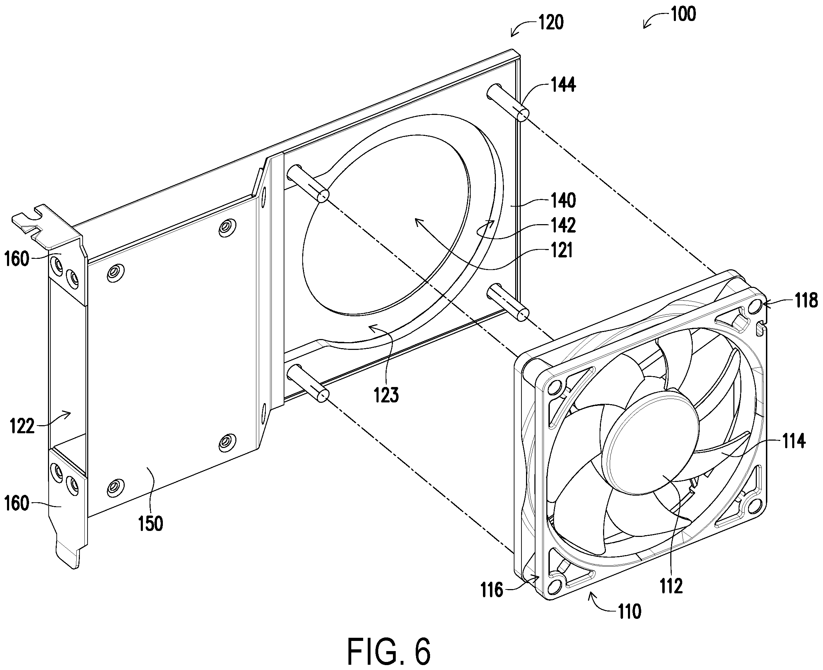

FIG. 6 is a schematic view of a fan unit and a flow guide assembly of FIG. 4. Please refer to FIG. 6. The flow guide assembly 120 includes a bottom casing 130 and an inner rectifying structure 140. The first air outlet 121 is located on the bottom casing 130. The inner rectifying structure 140 is disposed on the bottom casing 130. The inner rectifying structure 140 includes a C-shaped opening. 142. The first air outlet 121 is located within a projection range of the C-shaped opening 142 on the bottom casing 130. The C-shaped opening 142 faces the second air outlet 122.

In the embodiment, a wall surface of the C-shaped opening 142 of the inner rectifying structure 140 disposed on the bottom casing 130 forms a retaining wall. Therefore, the rotating and expanding airflow blown out by the fan unit 110 may be further guided by the wall surface of the C-shaped opening 142 to flow toward the second air outlet 122.

It should be noted that the inner rectifying structure 140 is a partial surrounding structure, and the C-shaped opening 142 refers to an opening of the partial surrounding structure. An inner wall surface of the partial surrounding structure may be arc-shaped and similar to a C-shape, may also be close to a U-shape, or may also be a shape composed of several intersecting straight lines, and is not limited to the drawing.

In addition, in an embodiment, the inner rectifying structure 140 may be a flexible material, and the hardness of the inner rectifying structure 140 is less than the hardness of the bottom casing 130. The inner rectifying structure 140 is, for example, high-density foam, but the type of the inner rectifying structure 140 is not limited thereto. Alternatively, in an embodiment, the inner rectifying structure 140 and the bottom casing 130 may be integrated. Alternatively, in an embodiment, the inner rectifying structure 140 and the bottom casing 130 may be made of the same material or have similar hardness and are fixed together through assembly.

In addition, as can be seen from FIG. 6, multiple positioning pillars 144 protrude from the inner rectifying structure 140. The positioning pillars 144 are located around the C-shaped opening 142, extend along the shaft line A (FIG. 4), and penetrate multiple positioning holes 118 of the fan unit 110, so that the fan unit 110 is positioned on and assembled to the flow guide assembly 120.

Therefore, when the fan unit 110 is assembled to the flow guide assembly 120, the inner rectifying structure 140 is directly covered. Wind blown out by the fan unit 110 directly enters the C-shaped opening 142 with a part leaving from the first air outlet 121 and the other part guided by a part of the bottom casing 130 next to the first air outlet 121 not covered by the inner rectifying structure 140 and the C-shaped opening 142 of the inner rectifying structure 140 to the second air outlet 122 to leave.

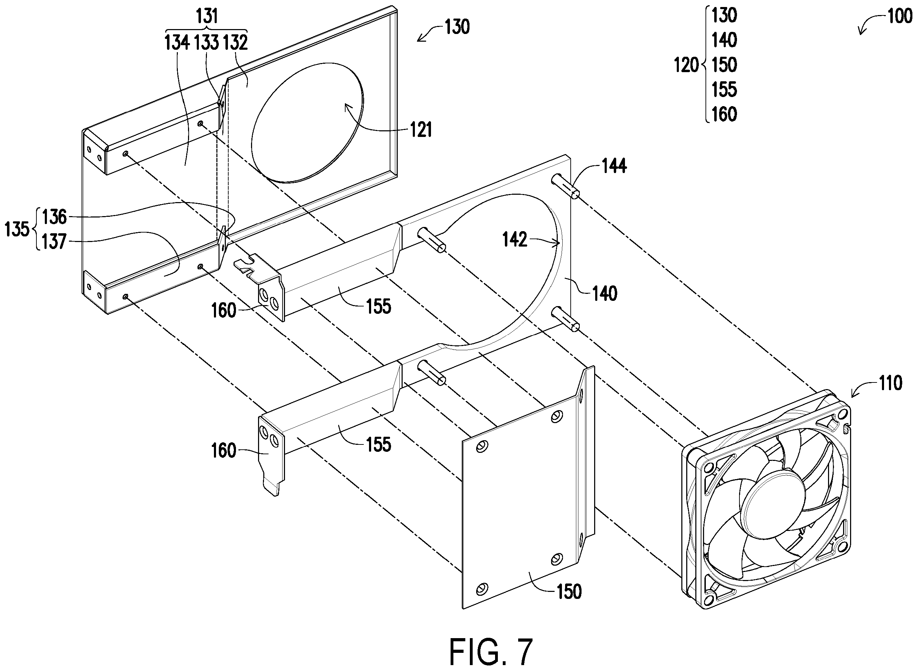

FIG. 7 is an exploded schematic view of FIG. 4. Please refer to FIG. 7. The bottom casing 130 includes a bottom plate 131 and two elevating members 135 protruding from the bottom plate 131. Each of the two elevating members 135 includes an increasing height portion 136 and a constant height portion 137 that are connected. In the embodiment, the bottom plate 131 and the elevating members 135 are integrated, and the elevating member 135 is formed by folding an excess part of the bottom plate 131, but the formation of the bottom plate 131 and the elevating members 135 is not limited thereto.

The bottom plate 131 includes a first area 132, a second area 133, and a third area 134 sequentially connected along the direction D. The positions of the first area 132, the second area 133, and the third area 134 correspond to the positions of the first flow guide portion 123, the second flow guide portion 125, and the third flow guide portion 127 of FIG. 5. The first air outlet 121 is located in the first area 132. Each increasing height portion 136 is located in the second area 133, and the height of the increasing height portion 136 gradually increases. Each constant height portion 137 is located in the third area 134.

The flow guide assembly 120 further includes two covers 155 and two fixing portions 160. The two covers 155 are connected to the inner rectifying structure 140 and cover the two elevating members 135. In an embodiment, the covers 155 and the inner rectifying structure 140 are integrated, but not limited thereto. In an embodiment, the covers 155 and the inner rectifying structure 140 are separated without connection.

In addition, the two fixing portions 160 are connected to the two covers 155 and are away from the inner rectifying structure 140. The two fixing portions 160 are configured to fix the fan card 100 onto the housing 20 of the electronic device 10.

In addition, the flow guide assembly 120 further includes a lid 150. The lid 150 covers the two elevating members 135, the second area 133, the third area 134, and the two covers 155. The bottom plate 131, the two elevating members 135, the two covers 155, and the lid 150 jointly surround to form the second air outlet 122.

Of course, the design of the flow guide assembly 120 is not limited thereto. In an embodiment, the covers 155 may be omitted. In an embodiment, the elevating members 135 may also be disposed on the lid 150, but not limited thereto.

In summary, the flow guide assembly of the fan card of the disclosure is disposed next to the fan unit and includes the first air outlet and the second air outlet facing different directions. The fan unit faces the first air outlet of the flow guide assembly, so that a part of the wind blown out by the fan unit is discharged from the first air outlet. In addition, since the area of the first air outlet of the flow guide assembly is smaller than the area surrounded by the fan blades of the fan unit, and the other part of the wind blown out by the fan unit is blocked or/and guided by the part of the flow guide assembly next to the first air outlet, the probability of air discharge from the second air outlet may be increased. Therefore, through the above design, the fan card of the disclosure may achieve air discharge in two directions through the single fan unit, thereby improving overall heat dissipation. In the electronic device adopting the fan card, the airflow entering the fan unit passes through the flow guide assembly, a part of the airflow flows from the first air outlet toward the expansion card to provide heat dissipation for the expansion card, and the other part of the airflow leaves the housing from the second air outlet, so that the heat in the housing may be guided out.

## Claims

1. A fan card (100), comprising:
a fan unit (110), comprising a rotating shaft (112) and a plurality of fan blades (114) extending outward from the rotating shaft (112); and
a flow guide assembly (120), disposed next to the fan unit (110) and comprising a first air outlet (121) and a second air outlet (122), wherein the fan unit (110) faces the first air outlet (121), an area of the first air outlet (121) is smaller than an area surrounded by the fan blades (114), and the second air outlet (122) and the first air outlet (121) face different directions,
wherein an airflow entering the fan unit (110) passes through the flow guide assembly (120) and is discharged from the first air outlet (121) and the second air outlet (122).

2. The fan card (100) according to claim 1, wherein the flow guide assembly (120) comprises a first flow guide portion (123), a second flow guide portion (125), and a third flow guide portion (127) that are sequentially connected along a direction (D), an aperture (D1, D2) of the first flow guide portion (123) along the direction (D) is smaller than an aperture (D1, D2) of the third flow guide portion (127) along the direction (D), an aperture of the second flow guide portion (125) along the direction (D) gradually expands, the first air outlet (121) is located on the first flow guide portion (123), and the second air outlet (122) is located on the third flow guide portion (127).

3. The fan card (100) according to claim 2, wherein the first flow guide portion (123) has a surface (124) lower than the third flow guide portion (127), and the fan unit (110) is disposed on the surface (124).

4. The fan card (100) according to claim 2, wherein the second flow guide portion (125) comprises an inclined surface (126), and the inclined surface (126) faces a side wall (116) of the fan unit (110).

5. The fan card (100) according to claim 1, wherein the flow guide assembly (120) comprises a bottom casing (130) and an inner rectifying structure (140), the first air outlet (121) is located on the bottom casing (130), the inner rectifying structure (140) is disposed on the bottom casing (130), the inner rectifying structure (140) comprises a C-shaped opening (142), the first air outlet (121) is located within a projection range of the C-shaped opening (142) on the bottom casing (130), and the C-shaped opening (142) faces the second air outlet (122).

6. The fan card (100) according to claim 5, wherein the bottom casing (130) comprises a bottom plate (131) and two elevating members (135) protruding from the bottom plate (131), each of the two elevating members (135) comprises an increasing height portion (136) and a constant height portion (137) that are connected, the bottom plate (131) comprises a first area (132), a second area (133), and a third area (134) that are sequentially connected along a direction (D), the first air outlet (121) is located in the first area (132), the increasing height portion (136) is located in the second area (133), the constant height portion (137) is located in the third area (134), the flow guide assembly (120) further comprises a lid (150), the lid (150) covers the two elevating members (135), the second area (133), and the third area (134), and the bottom plate (131), the two elevating members (135), and the lid (150) surround to form the second air outlet (122).

7. The fan card (100) according to claim 6, wherein the flow guide assembly (120) further comprises two covers (155) and two fixing portions (160), the two covers (155) are connected to the inner rectifying structure (140) and cover the two elevating members (135), the two fixing portions (160) are connected to the two covers (155) and are away from the inner rectifying structure (140), and the lid (150) covers the two covers (155).

8. The fan card (100) according to claim 5, wherein a plurality of positioning pillars (144) protrude from the inner rectifying structure (140), the positioning pillars (144) are located around the C-shaped opening (142), extend along a shaft line (A) of the rotating shaft (112), and penetrate a plurality of positioning holes (118) of the fan unit (110).

9. The fan card (100) according to claim 5, wherein the inner rectifying structure (140) is a flexible material, and a hardness of the inner rectifying structure (140) is less than or equal to a hardness of the bottom casing (130).

10. The fan card (100) according to claim 5, wherein the inner rectifying structure (140) and the bottom casing (130) are integrated.

11. The fan card (100) according to claim 1, wherein the fan unit (110) is an axial flow fan, and air enters and is discharged along a shaft line (A) of the rotating shaft (112).

12. An electronic device (10), comprising:
a housing (20), comprising an opening (22);
a motherboard (30), disposed in the housing (20) and comprising a slot (32, 34);
an expansion card (40), inserted into the slot (32, 34); and
the fan card (100) according to any one of claims 1 to 11, disposed next to the expansion card (40) and fixed onto the housing (20), wherein the first air outlet (121) faces the expansion card (40), the second air outlet (122) faces the opening (22), and the airflow entering the fan unit (110) passes through the flow guide assembly (120), flows from the first air outlet (121) toward the expansion card (40), and leaves the housing (20) from the second air outlet (122) and the opening (22).

## Amended claims

### Amended claims in accordance with Rule 137(2) EPC.

1. A fan card (100), comprising:
a fan unit (110), comprising a rotating shaft (112) and a plurality of fan blades (114) extending outward from the rotating shaft (112); and
a flow guide assembly (120), disposed next to the fan unit (110) and comprising a first air outlet (121) and a second air outlet (122), wherein the fan unit (110) faces the first air outlet (121), an area of the first air outlet (121) is smaller than an area surrounded by the fan blades (114), and the second air outlet (122) and the first air outlet (121) face different directions,
wherein an airflow entering the fan unit (110) passes through the flow guide assembly (120) and is discharged from the first air outlet (121) and the second air outlet (122), **characterized in that**
the flow guide assembly (120) comprises a bottom casing (130) and an inner rectifying structure (140), the first air outlet (121) is located on the bottom casing (130), the inner rectifying structure (140) is disposed on the bottom casing (130), the inner rectifying structure (140) comprises a C-shaped opening (142), the first air outlet (121) is located within a projection range of the C-shaped opening (142) on the bottom casing (130), and the C-shaped opening (142) faces the second air outlet (122).

2. The fan card (100) according to claim 1, wherein the flow guide assembly (120) comprises a first flow guide portion (123), a second flow guide portion (125), and a third flow guide portion (127) that are sequentially connected along a direction (D), an aperture (D1, D2) of the first flow guide portion (123) along the direction (D) is smaller than an aperture (D1, D2) of the third flow guide portion (127) along the direction (D), an aperture of the second flow guide portion (125) along the direction (D) gradually expands, the first air outlet (121) is located on the first flow guide portion (123), and the second air outlet (122) is located on the third flow guide portion (127).

3. The fan card (100) according to claim 2, wherein the bottom casing (130) comprises a bottom plate (131), a distance between the bottom plate (131) and a surface (124) of the first flow guide portion (123), on which the fan unit (110) is disposed, is smaller than a distance between the bottom plate (131) and a surface of the third flow guide portion (127).

4. The fan card (100) according to claim 2, wherein the second flow guide portion (125) comprises an inclined surface (126), and the inclined surface (126) faces a side wall (116) of the fan unit (110).

5. The fan card (100) according to claim 1, wherein the bottom casing (130) comprises a bottom plate (131) and two elevating members (135) protruding from the bottom plate (131), each of the two elevating members (135) comprises an increasing height portion (136) and a constant height portion (137) that are connected, the bottom plate (131) comprises a first area (132), a second area (133), and a third area (134) that are sequentially connected along a direction (D), the first air outlet (121) is located in the first area (132), the increasing height portion (136) is located in the second area (133), the constant height portion (137) is located in the third area (134), the flow guide assembly (120) further comprises a lid (150), the lid (150) covers the two elevating members (135), the second area (133), and the third area (134), and the bottom plate (131), the two elevating members (135), and the lid (150) surround to form the second air outlet (122).

6. The fan card (100) according to claim 5, wherein the flow guide assembly (120) further comprises two covers (155) and two fixing portions (160), the two covers (155) are connected to the inner rectifying structure (140) and cover the two elevating members (135), the two fixing portions (160) are connected to the two covers (155) and are away from the inner rectifying structure (140), and the lid (150) covers the two covers (155).

7. The fan card (100) according to claim 1, wherein a plurality of positioning pillars (144) protrude from the inner rectifying structure (140), the positioning pillars (144) are located around the C-shaped opening (142), extend along a shaft line (A) of the rotating shaft (112), and penetrate a plurality of positioning holes (118) of the fan unit (110).

8. The fan card (100) according to claim 1, wherein the inner rectifying structure (140) is a flexible material, and a hardness of the inner rectifying structure (140) is less than or equal to a hardness of the bottom casing (130).

9. The fan card (100) according to claim 1, wherein the inner rectifying structure (140) and the bottom casing (130) are integrated.

10. The fan card (100) according to claim 1, wherein the fan unit (110) is an axial flow fan, and air enters and is discharged along a shaft line (A) of the rotating shaft (112).

11. An electronic device (10), comprising:
a housing (20), comprising an opening (22);
a motherboard (30), disposed in the housing (20) and comprising a slot (32, 34);
an expansion card (40), inserted into the slot (32, 34); and
the fan card (100) according to any one of claims 1 to 10, disposed next to the expansion card (40) and fixed onto the housing (20), wherein the first air outlet (121) faces the expansion card (40), the second air outlet (122) faces the opening (22), and the airflow entering the fan unit (110) passes through the flow guide assembly (120), flows from the first air outlet (121) toward the expansion card (40), and leaves the housing (20) from the second air outlet (122) and the opening (22).
